# EUROPÄISCHE PATENTANMELDUNG

(11) **EP 2 407 694 A2**
(43) Veröffentlichungstag der Anmeldung: **18.01.2012**
(21) Anmeldenummer: 11002367.8
(22) Anmeldetag: 22.03.2011
(51) Int. Cl.: F16K 17/10

(54) **Ventil zur Druckbegrenzung sowie Vorrichtung hierzu**

(30) Priorität: 12.07.2010 CH 11322010
(71) Anmelder: Liebherr-Machines Bulle SA, 1630 Bulle (CH)
(72) Erfinder: Progin, Pascal, 1628 Vuadens (CH); Kurzen, Andreas, 16300 Bulle (CH)
(74) Vertreter: Laufhütte, Dieter

(57) **Zusammenfassung**

Die vorliegende Erfindung betrifft ein Ventil (110 ,210, 310) zur Druckbegrenzung, insbesondere ein vorgesteuertes Druckbegrenzungsventil (110 ,210, 310), mit wenigstens einem Druckbegrenzungsmittel zur zumindest teilweisen Begrenzung des Drucks eines Fluidstroms, wobei das Ventil (110 ,210, 310) eine Dämpfungscharakteristik aufweist, die den Zusammenhang des Druckanstiegs im Ventil in Abhängigkeit von der Zeit beim zumindest teilweisen Öffnen des Ventils beschreibt, und wobei wenigstens ein Einstellmittel (120, 220, 320) vorgesehen ist, mittels dessen die Dämpfungscharakteristik einstellbar ist. Des Weiteren betrifft die vorliegende Erfindung eine Vorrichtung mit wenigstens einem derartigen Ventil (110, 210, 310) zur Druckbegrenzung.

## Beschreibung

Die vorliegende Erfindung betrifft ein Ventil zur Druckbegrenzung sowie eine Vorrichtung hierzu.

Druckbegrenzungsventile finden beispielsweise bei Drehwerksantrieben Anwendung und dienen dazu, einen Fluidstrom hinsichtlich des Drucks zu begrenzen.

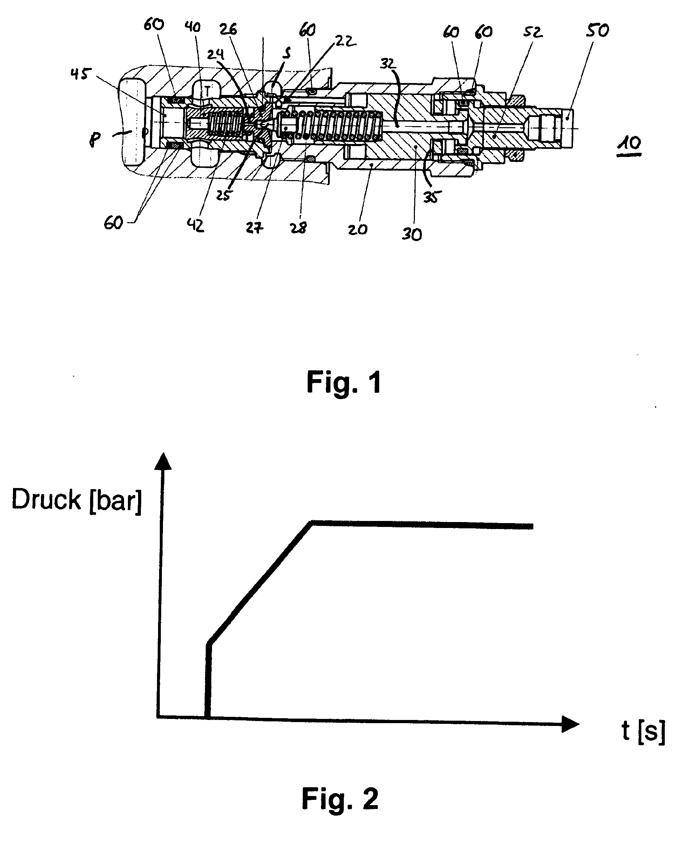

Aus dem Stand der Technik sind bereits vorgesteuerte Druckbegrenzungsventile mit einer nicht einstellbaren Dämpfungscharakteristik bekannt. Ein derartiges Druckbegrenzungsventil ist beispielsweise in Figur 1 gezeigt. Bei einem derartigen Ventil wird ein Teil des durch das Ventil strömenden Öles abgezweigt und durchströmt als Steuerölmenge den Steuerteil bzw. die Vorsteuerstufe des Ventils, wobei bei Erreichen eines bestimmten Druckniveaus das Ventil für den Hauptfluidstrom öffnet.

Die Steuerölmenge wird üblicherweise durch eine Drosseldüse angestaut, wodurch der Druck hinter der Vorsteuerstufe ansteigt. Hierdurch wird zugleich bewirkt, dass das notwendige Druckniveau zum Öffnen des Druckbegrenzungsventils ansteigt. Dadurch wird erreicht, dass der Druck beim Öffnen des Ventils nicht schlagartig, sondern gedämpft bis zum Maximaldruck, den das Ventil zuläßt, ansteigt. Dieser Zusammenhang wird durch den Druckbegrenzungsgradienten bzw. die Dämpfungscharakteristik des Ventils beschrieben.

Bei den bislang bekannten vorgesteuerten Druckbegrenzungsventilen ist die Dämpfungscharakteristik durch die Auslegung des Ventils von vorneherein festgelegt.

Wünschenswert wäre es jedoch, ein vorgesteuertes Druckbegrenzungsventil hinsichtlich seiner Dämpfungscharakteristik anpassen zu können, um ggf. Besonderheiten spezieller Anwendungsfälle besser gerecht werden zu können und/oder eine bedarfsgerechte Einstellung der Dämpfungscharakteristik vornehmen zu können.

Es ist daher die Aufgabe der vorliegenden Erfindung, ein Ventil der eingangs genannten Art in vorteilhafter Weise weiterzubilden, insbesondere dahingehend, dass dessen Anwendungsbereich vergrößert und/oder das Ventil variabel an Betriebscharakteristiken anpassbar ist, wobei vorzugsweise die Dämpfungscharakteristik bedarfsgerecht einstellbar ist.

Diese Aufgabe wird erfindungsgemäß gelöst durch ein Ventil mit den Merkmalen des Anspruchs 1. Danach ist vorgesehen, dass ein Ventil zur Druckbegrenzung, insbesondere ein vorgesteuertes Druckbegrenzungsventil, mit wenigstens einem Druckbegrenzungsmittel zur zumindest teilweisen Begrenzung des Drucks eines Fluidstroms versehen ist, wobei das Ventil eine Dämpfungscharakteristik aufweist, die den Zusammenhang des Druckanstiegs im Ventil in Abhängigkeit von der Zeit beim zumindest teilweisen Öffnen des Ventils beschreibt, und wobei wenigstens ein Einstellmittel vorgesehen ist, mittels dessen die Dämpfungscharakteristik einstellbar ist.

Die Dämpfungscharakteristik des Ventils definiert sich insbesondere dadurch, dass die Steuerölmenge durch eine Drossel angestaut wird, wodurch der Druck hinter Vorsteuerstufe des vorgesteuerten Druckbegrenzungsventils ansteigt. Hierdurch wird zugleich bewirkt, dass das notwendige Druckniveau zum Öffnen des Druckbegrenzungsventils ansteigt. Dadurch wird erreicht, dass der Druck beim Öffnen des Ventils nicht schlagartig, sondern gedämpft bis zum Maximaldruck, den das Ventil zuläßt, ansteigt.

Durch die Einstellbarkeit der Dämpfungscharakteristik ergibt sich insbesondere der Vorteil, dass die Dämpfungscharakteristik je nach Bedarf eingestellt werden kann. Es ist beispielsweise möglich, Druckspitzen abzufedern bzw. abzudämpfen, was sich vorteilhaft z. B. auf die Lebensdauer der eingesetzten Komponenten auswirken kann. Ferner ist es möglich, die Betriebssicherheit des Ventils zu erhöhen. Außerdem ist es nunmehr grundsätzlich möglich, den Druckaufbau zeitlich einzustellen, also entweder zu verzögern oder auch zu beschleunigen.

Insgesamt wird ein Ventil bereitgestellt, dass variabler einsetzbar und besser an die notwendigen Betriebsanforderungen anpassbar ist, ohne die bisherigen Vorteile eines vorgesteuerten Druckbegrenzungsventils aufzugeben.

Des Weiteren ist denkbar, dass das Druckbegrenzungsmittel wenigstens einen einstellbar druckbegrenzten Hauptzulauf, wenigstens einen Hauptablauf und wenigstens einen Steuerfluidablauf aufweist. Üblicherweise kann vorgesehen sein, dass sich der Steuerfluidzulauf vom Hauptzulauf abzweigt. Als durch den Hauptzulauf anströmendes Fluid, das druckbegrenzt durch den Hauptablauf abgeführt werden soll, kommt insbesondere Mineralöl wie Hydrauliköl in Betracht.

Weiter kann vorgesehen sein, dass mittels eines durch den Steuerfluidablauf strömenden Fluids ein Sperrmittel betätigbar ist, mittels dessen Hauptzulauf und der Hauptablauf druckbegrenzt mittelbar und/oder unmittelbar verbindbar sind.

Vorteilhafterweise ist möglich, dass das Sperrmittel wenigstens einen Hauptkolben und wenigstens einen Kegelsitz mit einen Sitz und einem Kegel umfaßt, wobei der Kegel über eine an einen Federkolben angestellte Feder belastbar ist oder belastet ist, wobei durch den Kegelsitz das über den Steuerfluidablauf zuführbare Steuerfluid in den Hauptkolben zuführbar ist und wobei mittels des durch den Hauptkolben hindurchführbaren Steuerfluids der Hauptkolben derart verstellbar ist, so dass der Hauptzulauf und der Hauptablauf druckbegrenzt mittelbar und/oder unmittelbar verbindbar oder verbunden sind. Der Kegelsitz bildet insbesondere hierbei die sogenannte Vorsteuerstufe des Ventils bzw. ist Teil der Vorsteuerstufe. Dadurch ergibt sich der Vorteil, dass mit einem kleinen Volumenstrom in der Vorsteuerstufe die Hauptstufe, in der das Sperrmittel angeordnet ist, mittels dessen der druckbegrenzte Hauptzulauf und der Hauptablauf mittelbar und/oder unmittelbar verbindbar sind, gesteuert wird. Anstatt des Kegelsitzes kann auch ein Kugelsitz verwendet wird. Es lassen sich besonders vorteilhaft sehr viel größere Volumenströme im Druck begrenzen, als dies mit einem direkt gesteuerten Ventil möglich wäre.

Ferner ist denkbar, dass das Einstellmittel wenigstens ein Drosselelement ist und/oder umfaßt, mittels dessen die Bewegung des Sperrmittels mittelbar und/oder unmittelbar beeinflußbar ist, vorzugsweise die Bewegung des Federkolbens beeinflußbar ist.

Darüber hinaus kann vorgesehen sein, dass die Beeinflussung der Bewegung des Federkolbens eine Beeinflussung der Bewegungsgeschwindigkeit des Federkolbens ist, die über eine Androsselung des vom Federkolben während seiner Bewegung verbrauchten und/oder verdrängten Volumenstroms erfolgt.

Es ist vorteilhaft möglich, dass das Einstellmittel, insbesondere das Drosselelement, variabel einstellbar ist, insbesondere stufenlos und/oder abgestuft verstellbar ist.

Insbesondere ist von Vorteil, wenn das Einstellmittel, insbesondere das Drosselelement, wenigstens eine Verstelldüse und/oder Drosselöffnung ist und/oder umfaßt.

Es kann vorgesehen sein, dass das Drosselelement im Federkolben angeordnet ist. Dadurch ergibt sich der Vorteil, das Drosselelement platzsparend im Ventil anordnen zu können. Insbesondere wird es dadurch möglich, die bisherigen Abmessungen eines vorgesteuerten Druckbegrenzungsventils beibehalten zu können.

Es ist denkbar, dass das Drosselelement mittels einer Verstellschraube verstellbar ist, wobei vorzugsweise das Drosselelement axial, insbesondere koaxial, im Federkolben geführt ist und weiter vorzugsweise die Verstellschraube koaxial zum Drosselelement und/oder Federkolben angeordnet ist und wobei weiter vorzugsweise Verstellschraube und Drosselelement zumindest teilweise formschlüssig ineinander eingreifen und/oder miteinander verbunden sind. Eine Verstellschraube gewährt insbesondere den Vorteil, dass eine stufenlose Verstellung einfach aber zugleich hochgenau möglich wird.

Des Weiteren ist möglich, dass der Federkolben zumindest teilweise in der Buchse aufgenommen und/oder geführt ist, wobei das Einstellmittel in und/oder an der Buchse angeordnet ist.

Ferner kann vorgesehen sein, dass durch die Buchse und den Federkolben wenigstens ein Raum, insbesondere ein Ringraum, ausgebildet wird, wobei mittels des Drosselelements der Zulauf des Steuerfluids zu dem Raum drosselbar ist. Grundsätzlich ist es vorteilhaft denkbar, die Bewegungsgeschwindigkeit des Federkolbens entweder durch eine Androsselung des von der Kolbenfläche verbrauchten Steuerfluidvolumens oder durch eine Androsselung des durch dessen Ringfläche verdrängten Steuerfluidvolumens zu erreichen. Dementsprechend ist es möglich, dass Steuerfluid angedrosselt z. B. in einen der Vorsteuerstufe zugewandten Raum zur Androsselung des durch dessen Ringfläche verdrängten Steuerfluidvolumens zu leiten oder in einen der Vorsteuerstufe abgewandten Raum zur Androsselung des durch dessen Kolbenfläche verdrängten Steuerfluidvolumens zu leiten. Auch ist grundsätzlich denkbar, beide Androsselungsmöglichkeiten in einem Ventil zu realisieren und je nach Bedarf zu variieren sowie einzusetzen.

Darüber hinaus ist möglich, dass wenigstens eine durch den Federkolben geführte Verbindungsleitung zwischen Steuerfluidablauf und Raum vorgesehen ist, in der das Drosselelement angeordnet ist oder dass wenigstens eine nicht durch den Federkolben geführte Verbindungsleitung zwischen Steuerfluidablauf und Raum vorgesehen ist, in der das Drosselelement angeordnet ist.

Des Weiteren betrifft die vorliegende Erfindung eine Vorrichtung umfassend wenigstens ein Ventil zur Druckbegrenzung mit den Merkmalen des Anspruchs 14. Danach ist vorgesehen, dass eine Vorrichtung wenigstens ein Ventil zur Druckbegrenzung nach einem der Ansprüche 1 bis 13 aufweist.

Vorzugsweise ist die Vorrichtung ein Drehwerksantrieb mit einem offenen oder geschlossenen Kreislauf oder umfaßt einen Drehwerksantrieb mit einem offenen oder geschlossenen Kreislauf.

Weitere Einzelheiten und Vorteile der Erfindung sollen nachstehend anhand eines in der Zeichnung dargestellten Ausführungsbeispiels näher erläutert werden. Es zeigen:
- Figur 1:: eine Schnittdarstellung eines bekannten vorgesteuerten Druckbegrenzungsventils;
- Figur 2:: die Kennlinie der Dämpfungscharakteristik des in Figur 1 gezeigten Druckbegrenzungsventils;
- Figur 3:: ein Druckbegrenzungsventil mit einstellbarer Dämpfungscharakteristik in einer ersten Ausführungsform;
- Figur 4;: ein Druckbegrenzungsventil mit einstellbarer Dämpfungscharakteristik in einer zweiten Ausführungsform;
- Figur 5:: ein Druckbegrenzungsventil mit einstellbarer Dämpfungscharakteristik in einer dritten Ausführungsform; und
- Figur 6:: die Kennlinien der Dämpfungscharakteristiken der in den Figuren 3 bis 5 gezeigten Druckbegrenzungsventile.

Figur 1 zeigt ein bekanntes vorgesteuertes Druckbegrenzungsventil 10 mit festgelegter bzw. fixer Dämpfungscharakteristik.

Dabei fließt, wie in Figur 1 gezeigt, durch den Hauptkolben 40 bei geöffnetem Druckbegrenzungsventil 10 eine Steuerölmenge, die über den Steuerfluidablauf S abgeführt wird, in Abhängigkeit von dessen Drosselquerschnitt. Diese Steuerölmenge fließt beim Erreichen des notwendigen Druckniveaus über den Kegelsitz 25 bestehend aus Sitz 26 und Kegel 27.

Der Volumenstrom, der über den Kegelsitz 25, auch Vorsteuerstufe genannt, fließt, erzeugt über eine Drosseldüse im Hauptkolben 40 einen Druckabfall. Damit ist der Druck vor und nach dem Hauptkolben 40 nicht mehr gleich groß. Mit der hieraus resultierenden Kraft wird der Kolben 40 gegen die Feder 42 gedrückt und öffnet den Hauptfluidführungsweg 45, durch den der druckbegrenzte Hauptzulauf P und der Hauptablauf T miteinander verbunden sind.

Die Düse 22 in der Buchse 20 staut die Steuerölmenge an und läßt den Druck hinter dem Kegelsitz 25 ansteigen. Im Kegelsitz 25 ist zudem eine Drosselbohrung 24 vorgesehen.

Durch die Zentralbohrung 32 des Federkolbens 30 kann der Druck auf dessen Kolbenoberfläche wirken und diesen in Richtung Kegelsitz 25 bewegen. Diese Bewegung erhöht die Kraft der Feder 28 und somit das notwendige Druckniveau zum Öffnen des gesamten Druckbegrenzungsventils 10. Die Bewegungsgeschwindigkeit des Federkolbens 30 definiert hier somit den Druckanstiegsgradienten des Druckbegrenzungsventils 10.

Der Federkolben 30 ist in der in Figur 1 gezeigten Ausführungsform in der Buchse 20 geführt und kann beispielsweise durch einen Druckanstieg im Ringraum 35 in Richtung des Kegelsitzes 25 geschoben werden. Die Vorspannung der Feder 28 kann mittelbar über die Einstellschraube 50 erfolgen. Die Einstellschraube 50 ist dabei in einer Halterung 52 eingeschraubt. Dadurch kann das für ein Öffnen des Ventils notwendige Druckniveau eingestellt werden.

Um die einzelnen Bestandteile des Ventils dichtend miteinander zu verbinden, sind entsprechende Sicherungs- und Dichtelemente 60 vorgesehen.

Figur 2 zeigt schematisch die Kennlinie der Dämpfungscharakteristik des in Figur 1 gezeigten Druckbegrenzungsventils 10. Die Dämpfungscharakteristik bzw. der Druckanstiegsgradient wird beschrieben durch den zeitlichen Verlauf des Drucks. Wie deutlich erkennbar ist, wird vereinfacht dargestellt durch die Bewegung des Federkolbens 30 der Druckanstieg bis zum Erreichen des maximalen Wertes linear gedämpft.

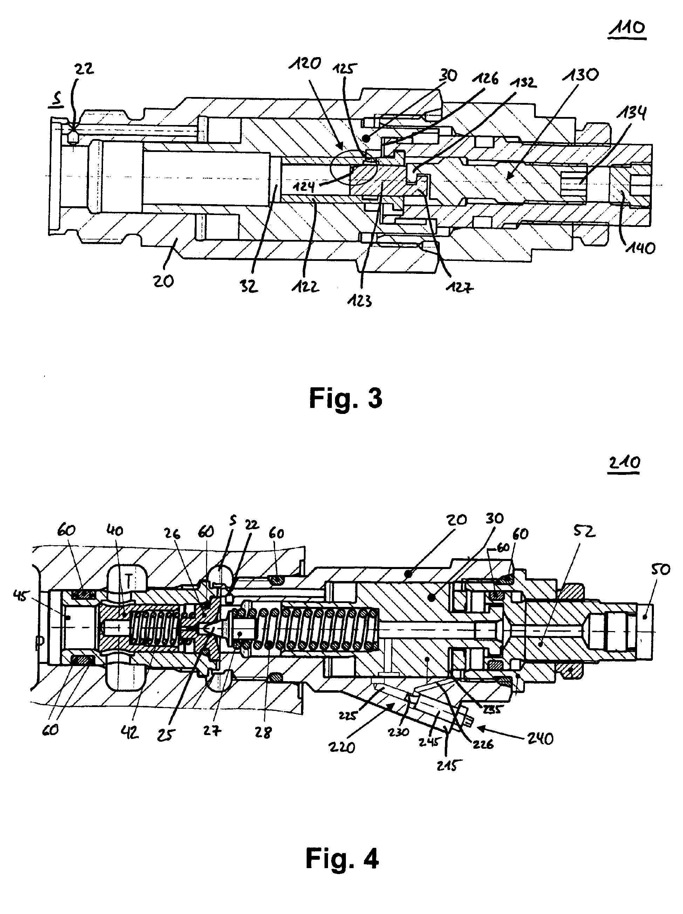

Die in den Figuren 3 bis 5 dargestellten Druckbegrenzungsventile 110, 210, 310 betreffen unterschiedliche Ausführungsformen von Druckbegrenzungsventilen mit einstellbarer Dämpfungscharakteristik. Diese Druckbegrenzungsventile 110, 210, 310 bauen grundsätzlich auf dem in Figur 1 gezeigten Prinzip bzw. der Grundbauform eines Druckbegrenzungsventils 10 auf, so dass gleiche Bauteile bzw. Komponenten mit gleichen Bezugszeichen versehen sind.

Figur 3 zeigt eine erste Ausführungsform eines vorgesteuerten Druckbegrenzungsventils 110 mit einstellbarer Dämpfungscharakteristik. Dabei ist in der Zentralbohrung 32 des Federkolbens 30, die koaxial zu diesem ist, ein einstellbares Drosselventil 120 angeordnet, durch das die von der Kolbenfläche verbrauchte Ölmenge bzw. die Ölmenge strömt, die durch Einströmen in den Ringraum 126 bewirkt, dass der Federkolben 30 in Richtung des Kegelsitzes 25 geschoben wird.

Durch die einstellbare zwangsweise Durchströmung kann die Bewegung des Federkolbens 30 beeinflußt werden und es läßt somit die Bewegungsgeschwindigkeit des Federkolbens 30 und damit die Dämpfungscharakteristik des gesamten Druckbegrenzungsventils 110 bestimmen.

Das als Verstelldüse 120 ausgeführte Drosselventil 120 weist eine in die Zentralbohrung des Federkolbens 30 eingesetzte Buchse 122 auf, in die ein drehbar in der Buchse aufgenommener Drosselstopfen 123 eingesetzt ist. Der Drosselstopfen 123 weist eine Drosselabschrägung zur Ausbildung einer Drossel- bzw. Düsenöffnung 124 auf, durch die das Öl hindurchtreten kann und über eine Radialbohrung 125 in der Buchse 122 in den Ringraum 126 gelangt.

Das Drosselventil 120 weist zur Verstellung einen hakenförmigen bzw. L-förmige Verstellkonnektor 127 auf, in den teilweise formschlüssig der Verstellkonnektor 132 der Verstellschraube 130 eingreift. Ein Drehen der Verstellschraube 130 bewirkt somit, dass der Drosselstopfen 123 sich relativ zu Buchse 122 verdreht, so dass die Drosselöffnung 124 hinsichtlich ihres Öffnungsquerschnittes verstellt werden kann. Die Verstellung kann z. B. mittels eines Inbus-Schlüssel erfolgen, der in die Werkzeugöffnung 134 eingesetzt wird, um die Verstellschraube 130 zu drehen. Der Zugang zur Verstellschraube 130 ist durch eine als Sicherungsschraube 140 ausgebildete Abdeckung 140 gesichert.

Figur 4 zeigt eine zweite Ausführungsform eines vorgesteuerten Druckbegrenzungsventils 210 mit einstellbarer Dämpfungscharakteristik. Dabei ist in der Buchse 20 ein einstellbares Drosselventil 220 angeordnet, durch das die von der Kolbenfläche verbrauchte Ölmenge bzw. die Ölmenge strömt, die durch Einströmen in den Ringraum 235 bewirkt, dass der Federkolben 30 in Richtung des Kegelsitzes geschoben wird.

Das Drosselventil 220 ist in einer sich schräg aus der Buchse 20 erhebenden Drosselausformung 215 angeordnet. Die Strömungskanäle 225, 226 des Drosselventils 220 sind dabei durch Schrägbohrungen ausgebildet. Die Drosselöffnung 230 kann durch eine Verstellschraube 240 verändert werden. Der drehbare Drosselstopfen 245 arbeitet dabei vergleichbar dem Drosselstopfen 123 gemäß dem in Figur 3 dargestellten Ausführungsbeispiel. Je nach Drosselöffnung kann pro Zeiteinheit mehr oder weniger Steueröl von dem Drosselkanal 225 in den Drosselkanal 226 und damit in den Ringraum 235 strömen. Durch die einstellbare zwangsweise Durchströmung der Drossel 220 läßt somit die Bewegungsgeschwindigkeit des Federkolbens 30 und damit die Dämpfungscharakteristik des gesamten Druckbegrenzungsventils 210 variieren.

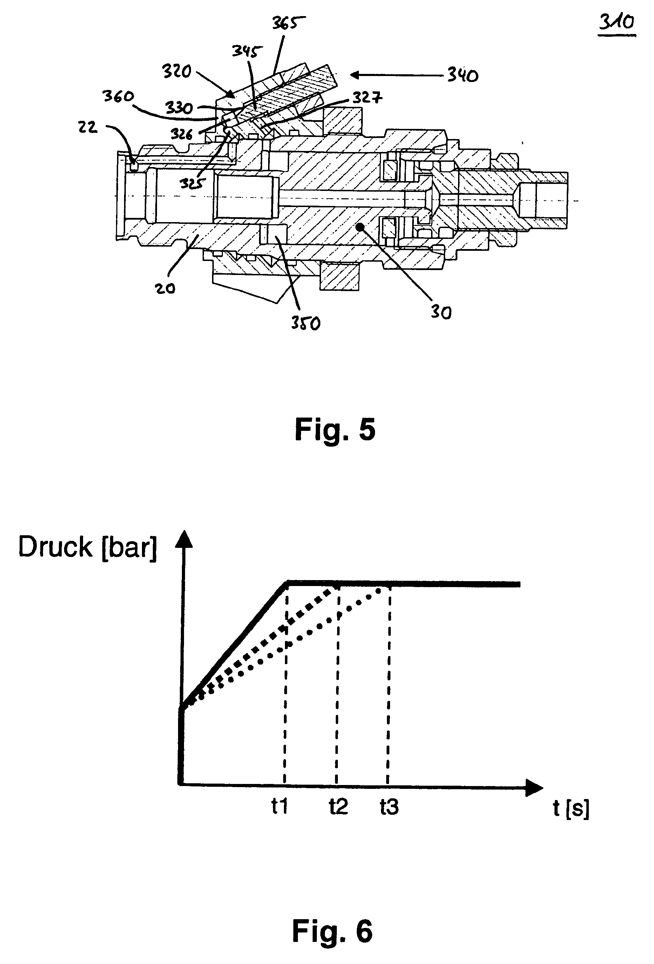

Figur 5 zeigt eine dritte Ausführungsform eines vorgesteuerten Druckbegrenzungsventils 310 mit einstellbarer Dämpfungscharakteristik. Dabei ist auf der Buchse 20 ein einstellbares Drosselventil 320 angeordnet bzw. aufgesetzt, durch das das von der Ringfläche verdrängte Ölvolumen, also das in den Ringraum 350 einströmende Öl angedrosselt wird.

Das Drosselventil 320 ist in einem schräg sich aus dem Drosselaufsatz 360 erhebenden Drosselausformung 365 angeordnet. Die Strömungskanäle 325, 326, 327 des Drosselventils 320 sind dabei durch Schrägbohrungen ausgebildet. Die Drosselöffnung 330 kann durch eine Verstellschraube 340 verändert werden. Der drehbare Drosselstopfen 345 arbeitet dabei vergleichbar dem Drosselstopfen 123 gemäß dem in Figur 3 dargestellten Ausführungsbeispiel bzw. dem Drosselstopfen 245 gemäß dem in Figur 4 dargestellten Ausführungsbeispiel. Je nach Drosselöffnung kann pro Zeiteinheit mehr oder weniger Steueröl aus dem Drosselkanal 327 und damit aus dem Ringraum 350 in den Drosselkanal 325 und 326 strömen. Durch die einstellbare zwangsweise Durchströmung der Drossel 320 läßt sich somit die Bewegungsgeschwindigkeit des Federkolbens 30 und damit die Dämpfungscharakteristik des gesamten Druckbegrenzungsventils 310 beeinflussen und einstellen.

Figur 6 zeigt schematisch die möglichen Kennlinien der Dämpfungscharakteristik der in den Figur 3 bis 5 gezeigten Druckbegrenzungsventile 110, 210, 310. Die eingestellte Kennlinie, bei der der maximale Druck zum Zeitpunkt t = t1 erreicht wird, ist mit der durchgezogenen Linie eingezeichnet. Beispielhaft sind weitere Dämpfungscharakteristiken mit gepunkteten Linien eingezeichnet, bei denen der maximale Druck zum Zeitpunkt t = t2 bzw. t = t3 erreicht wird.

## Patentansprüche

1. Ventil (110, 210, 310) zur Druckbegrenzung, insbesondere vorgesteuertes Druckbegrenzungsventil (110, 210, 310), mit wenigstens einem Druckbegrenzungsmittel zur zumindest teilweisen Begrenzung des Drucks eines Fluidstroms, wobei das Ventil (110, 210, 310) eine Dämpfungscharakteristik aufweist, die den Zusammenhang des Druckanstiegs im Ventil in Abhängigkeit von der Zeit beim zumindest teilweisen Öffnen des Ventils (110, 210, 310) beschreibt, und wobei wenigstens ein Einstellmittel (120, 220, 320) vorgesehen ist, mittels dessen die Dämpfungscharakteristik einstellbar ist.

2. Ventil (110, 210, 310) nach Anspruch 1, **dadurch gekennzeichnet, dass** das Druckbegrenzungsmittel wenigstens einen einstellbar druckbegrenzten Hauptzulauf (P), wenigstens einen Hauptablauf (T) und wenigstens einen Steuerfluidablauf (S) aufweist.

3. Ventil (110, 210, 310) nach Anspruch 2, **dadurch gekennzeichnet, dass** mittels eines durch den Steuerfluidablaufs (S) strömenden Fluids ein Sperrmittel betätigbar ist, mittels dessen der Hauptzulauf und der Hauptablauf druckbegrenzt mittelbar und/oder unmittelbar verbindbar sind.

4. Ventil (110, 210, 310) nach Anspruch 3, **dadurch gekennzeichnet, dass** das Sperrmittel wenigstens einen Hauptkolben (40) und wenigstens einen Kegelsitz (25) mit einen Sitz (26) und einem Kegel (27) umfaßt, wobei der Kegel (27) über eine an einen Federkolben (30) angestellte Feder (28) belastbar ist oder belastet ist, wobei durch den Kegelsitz (25) das über den Steuerfluidablauf (S) zuführbare Steuerfluid von dem Hauptkolben (40) abgezweigt ist und wobei mittels des durch den Hauptkolben (40) hindurchführbaren Steuerfluids der Hauptkolben (40) derart verstellbar ist, so dass der Hauptzulauf (P) und der Hauptablauf (T) druckbegrenzt mittelbar und/oder unmittelbar verbindbar oder verbunden sind.

5. Ventil (110, 210, 310) nach einem der Ansprüche 3 oder 4, **dadurch gekennzeichnet, dass** das Einstellmittel (120, 220, 320) wenigstens ein Drosselelement (124, 230, 330) ist und/oder umfaßt, mittels dessen die Bewegung des Sperrmittels mittelbar und/oder unmittelbar beeinflußbar ist, vorzugsweise die Bewegung des Federkolbens (30) beeinflußbar ist.

6. Ventil (110, 210, 310) nach Anspruch 5, **dadurch gekennzeichnet, dass** die Beeinflussung der Bewegung des Federkolbens (30) eine Beeinflussung der Bewegungsgeschwindigkeit des Federkolbens (30) ist, die über eine Androsselung des vom Federkolben (30) während seiner Bewegung verbrauchten und/oder verdrängten Volumenstroms erfolgt.

7. Ventil (110, 210, 310) nach einem der vorhergehenden Ansprüche, **dadurch gekennzeichnet, dass** das Einstellmittel (120, 220, 320), insbesondere das Drosselelement (124, 230, 330), variabel einstellbar ist, insbesondere stufenlos und/oder abgestuft verstellbar ist.

8. Ventil (110, 210, 310) nach einem der vorhergehenden Ansprüche, **dadurch gekennzeichnet, dass** das Einstellmittel (120, 220, 320), insbesondere das Drosselelement (124, 230, 330), wenigstens eine Verstelldüse und/oder Drosselöffnung ist und/oder umfaßt.

9. Ventil (110) nach einem der Ansprüche 5 bis 8, **dadurch gekennzeichnet, dass** das Drosselelement (124) im Federkolben (30) angeordnet ist.

10. Ventil (110) nach Anspruch 9, **dadurch gekennzeichnet, dass** das Drosselelement (124) mittels einer Verstellschraube (130) verstellbar ist, wobei vorzugsweise das Drosselelement (124) axial, insbesondere koaxial, im Federkolben (30) geführt ist und weiter vorzugsweise die Verstellschraube (130) koaxial zum Drosselelement (124) und/oder Federkolben (30) angeordnet ist und wobei weiter vorzugsweise Verstellschraube (130) und Drosselelement (124) zumindest teilweise formschlüssig ineinander eingreifen und/oder miteinander verbunden sind.

11. Ventil (210, 310) nach einem der Ansprüche 5 bis 8, **dadurch gekennzeichnet, dass** der Federkolben (30) zumindest teilweise in der Buchse (20) aufgenommen und/oder geführt ist, wobei das Einstellmittel (220, 320) in und/oder an der Buchse (20) angeordnet ist.

12. Ventil (210, 310) nach Anspruch 11, **dadurch gekennzeichnet, dass** durch die Buchse (20) und den Federkolben (30) wenigstens ein Raum (235, 350), insbesondere ein Ringraum (235, 350), ausgebildet wird, wobei mittels des Drosselelement (230, 330) der Zulauf des Steuerfluids zu dem Raum (235, 350) drosselbar ist.

13. Ventil (210, 310) nach Anspruch 12, **dadurch gekennzeichnet, dass** wenigstens eine durch den Federkolben (30) geführte Verbindungsleitung zwischen Steuerfluidablauf (S) und Raum (235) vorgesehen ist, in der das Drosselelement (230) angeordnet ist oder dass wenigstens eine nicht durch den Federkolben (30) geführte Verbindungsleitung zwischen Steuerfluidablauf (S) und Raum (350) vorgesehen ist, in der das Drosselelement (330) angeordnet ist.

14. Vorrichtung umfassend wenigstens ein Ventil (110, 210, 310) nach einem der vorhergehenden Ansprüche, wobei die Vorrichtung vorzugsweise ein Drehwerksantrieb mit einem offenen oder geschlossenen Kreislauf ist oder vorzugsweise einen Drehwerksantrieb mit einem offenen oder geschlossenen Kreislauf umfaßt.
